# EUROPEAN PATENT SPECIFICATION

(11) **EP 2 086 138 B1**
(45) Date of publication and mention of the grant of the patent: **18.04.2018**
(21) Application number: 07827971.8
(22) Date of filing: 31.10.2007
(51) Int. Cl.: H04J 11/00, H04B 7/15, H04J 1/00, H04B 7/155, H04B 7/208, H04L 27/26

(54) **RELAY DEVICE AND BROADCAST SYSTEM WITH USE OF THE SAME**
RELAYEINRICHTUNG UND DIESES VERWENDENDES BROADCAST-SYSTEM
DISPOSITIF DE RELAIS ET SYSTÈME DE DIFFUSION À L'AIDE DE CELUI-CI

(30) Priority: 09.11.2006 JP 2006304498
(43) Date of publication of application: 05.08.2009
(73) Proprietor: JAPAN RADIO CO., LTD, Mitaka-shi, Tokyo 181-8510 (JP)
(72) Inventor: MAGARIFUCHI, Masatoshi, Mitaka-shi Tokyo 181-8510 (JP); MASE, Toyoji, Mitaka-shi Tokyo 181-8510 (JP)
(74) Representative: Schröer, Gernot H.
(86) International application number: PCT/JP2007/001192
(87) International publication number: WO 2008/056439

(56) References cited:
- EP-A1- 1 750 403
- WO-A2-2007/052131
- JP-A- 11 317 715
- JP-A- 2001 197 034
- JP-A- 2006 020 128
- JP-A- 2006 109 283
- JP-A- 2007 049 696
- MARKUS HERDIN ED - HUNG-YU WEI ET AL: "A Chunk Based OFDM Amplify-and-Forward Relaying Scheme for 4G Mobile Radio Systems", COMMUNICATIONS, 2006. ICC '06. IEEE INTERNATIONAL CONFERENCE ON, IEEE, PI, 1 June 2006 (2006-06-01), pages 4507-4512, XP031025619, ISBN: 978-1-4244-0354-7
- HUI-SHIN CHAE ET AL: "An Adaptive Repeater System for OFDM with Frequency Hopping Control to Reduce the Interference", 17 August 2005 (2005-08-17), KNOWLEDGE-BASED INTELLIGENT INFORMATION AND ENGINEERING SYSTEMS; [LECTURE NOTES IN COMPUTER SCIENCE;LECTURE NOTES IN ARTIFICIAL INTELLIGENCE;LNCS], SPRINGER-VERLAG, BERLIN/HEIDELBERG, PAGE(S) 485 - 491, XP019015359, ISBN: 978-3-540-28894-7 * figures 5,6 * * Section 2.2 Proposed Repeater System *
- HOTTINEN A ET AL: "Subchannel assignment in OFDM relay nodes", PROCEEDINGS OF THE ANNUAL CONFERENCE ON INFORMATION SCIENCES ANDSYSTEMS, XX, XX, 1 March 2006 (2006-03-01), pages 1314-1317, XP003011320,

## Description

The present invention relates to a relay technology, more particularly, to a relay apparatus relaying OFDM signals formed by a plurality of channels and a broadcasting system using the same.

In a broadcasting system such as the television broadcasting system, signals are transmitted as electromagnetic waves from a broadcasting station. A receiving apparatus receives signals transmitted from the broadcasting station and acquires video information and audio information from the received signals. Signals to be transmitted from the broadcasting station are, as stipulated in the regulations, of a specific transmission power, of a desired to undesired signal ratio, or the like, in order for a certain quality of information to be acquired by receiving apparatuses located in an area within the broadcasting range of the station. However, even if a broadcasting station transmits signals satisfying the regulations, the electric field intensity of the signals received by a receiving apparatus is insufficient in the case where an obstacle to the electromagnetic waves, or the like, is present within the broadcasting range; hence, there is an area within the broadcasting range where information of a certain quality cannot be acquired. Therefore, a relay apparatus for receiving signals transmitted from a broadcasting station and for amplifying the signals to transmit is to be installed within the broadcasting range in order to reduce the areas where information of a certain quality cannot be acquired (see, for example, Patent Document 1).

Patent Document 1: Japanese Patent Application Laid-Open No. 2005-45728.

A relay apparatus stated above generally receives, by a receiving antenna, a plurality of channels that are frequency multiplexed. In order to install such a relay apparatus for various areas, it is desirable that the relay apparatus has a simple structure. For example, a relay apparatus is structured so as to amplify received signals and then to transmit them. However, the relay apparatus having such a structure cannot deal with the case where a channel structure of signals received by the relay apparatus is different from that of signals transmitted therefrom. In other words, the degree of freedom of the channel structure is decreased.

MARKUS HERDIN ED - HUNG-YU WEI ET AL: "A Chunk Based OFDM Amplify-and-Forward Relaying Scheme for 4G Mobile Radio Systems", COMMUNICATIONS, 2006. ICC '06. IEEE INTERNATIONAL CONFERENCE ON; HUI-SHIN CHAE ET AL: "An Adaptive Repeater System for OFDM with Frequency Hopping Control to Reduce the Interference", 17 August 2005; and HOTTINEN A ET AL: "Subchannel assignment in OFDM relay nodes", 1 March 2006, all propose a Decode and Forward relay system with subcarrier reassignment between FFT demodulation and subsequent IFFT remodulation.

JP 2006 109283 discloses a Decode and Forward relay for ISDB-T television broadcasting where the frequency location of the channels (consisting in multiple subcarriers each) are rearranged between FFT and IFFT.

The present invention has been made in view of these situations, and a purpose of the invention is to provide a relay technology in which the relay of signals is performed while the channel structure is freely set.

In order to address the above problem, a relay apparatus according to the appended claim is proposed.

According to the embodiment, the channel structure can be freely set, because OFDM signals are converted into a plurality of sub-carrier signals by applying Fourier transform processing to a channel unit of the OFDM signals, and then the arrangement of the sub-carrier channels is modified while sub-carrier signals included in the channel are grouped into one unit.

When performing the modification of the arrangement of the arrangement, the modification unit may perform a division of the arrangement into a plurality of groups, and the second conversion unit may also generate new OFDM signals by applying not only inverse Fourier transform processing to a group unit but also frequency conversion to a group unit. In this case, the degree of freedom in setting a channel structure can be further improved due to the application of the frequency conversion of a group unit.

The invention will be now described by way of example with reference to the accompanying drawings, throughout which like parts are referred to by like references, and in which:
Fig. 1 is a drawing illustrating the structure of a relay apparatus according to an exemplary embodiment of the present invention;
Fig. 2 is a drawing illustrating a data structure of a table stored in a setting unit in Fig. 1;
Figs. 3(a) and 3(b) are drawings illustrating an outline of a modification operation in the modification unit in Fig. 1;
Fig. 4 is a drawing illustrating the structure of the relay apparatus according to a modification example of the present invention;
Fig. 5 is a drawing illustrating the structure of a relay apparatus according to another modification example of the present invention;
Fig. 6 is a drawing illustrating the structure of a transmission apparatus according to still another modification example of the present invention;
Figs. 7 (a) to 7 (e) are drawings illustrating an outline of deriving a frequency characteristic by a setting unit according to the modification example of Fig. 6 of the present invention; and
Fig. 8 is a drawing illustrating the structure of the setting unit in Fig. 7.

Prior to the specific description of the present invention, an outline thereof will be described. An example of the invention relates to a relay apparatus in the digital terrestrial television broadcasting system. The terrestrial television broadcasting system deals with a single frequency network (hereinafter, referred to as "SFN") in some cases, or a multiple frequency network (hereinafter, referred to as "MFN") in other cases. Herein, the former will be taken into consideration for ease of explanation. It is noted that the SFN deals with the case where the frequency band of received signals is the same as that of signals to be transmitted; on the other hand, the MFN deals with the case where both frequency bands thereof are different from each other. The relay apparatus receives signals in which a plurality of frequency-multiplexed channels are included and transmits the signals after amplifying them.

In the above situations, the relay apparatus according to the exemplary embodiment of the present invention is structured, as described below, in order to deal with the case where the channel structure of the signals received by the relay apparatus is different from that of the signals to be transmitted from the relay apparatus. Each channel is formed by OFDM signals, that is, a plurality of sub-carriers. The relay apparatus converts the received signals into signals corresponding to each of the plurality of sub-carriers (hereinafter, signals corresponding to a single sub-carrier are referred to "sub-carrier signals") by applying FFT processing collectively to the received signals. The relay apparatus modifies an arrangement of the sub-carrier signals, while the plurality of sub-carrier signals included in a channel are grouped into one unit. The modification is equivalent to the channel structure of the signals to be transmitted from the relay apparatus. In addition, the relay apparatus applies IFFT processing to the sub-carrier signals arrangement of which has been modified and then transmits the signals. For convenience of explanation, signals in the time domain are denoted by OFDM signals and those in the frequency domain denoted by a plurality of sub-carrier signals in the following description.

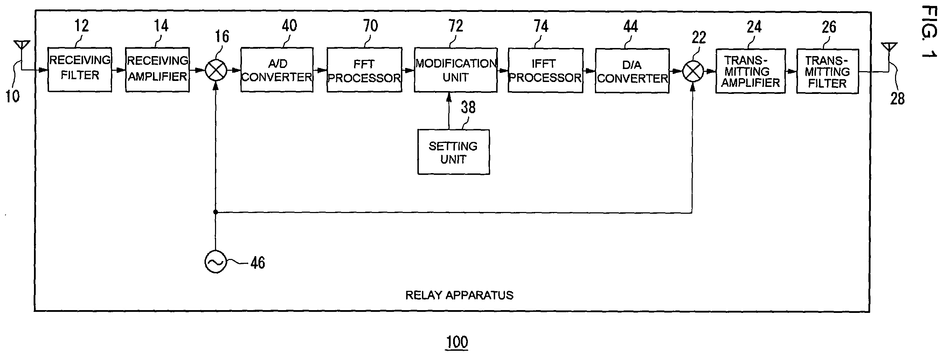

Fig. 1 illustrates the structure of the relay apparatus 100 according to the example of the present invention. The relay apparatus 100 includes a receiving antenna 10, a receiving filter 12, a receiving amplifier 14, a frequency converter 16, a local oscillator 46, an A/D converter 40, an FFT processor 70, a modification unit 72, a setting unit 38, an IFFT processor 74, a D/A converter 44, a frequency converter 22, a transmitting amplifier 24, a transmitting filter 26, and a transmitting antenna 28.

The receiving antenna 1.0 receives OFDM signals formed by a plurality of channels. The plurality of channels are frequency multiplexed. The broadcasting system according to the example is assumed to correspond to the ISDB-T (Terrestrial Integrated Services Digital Broadcasting) system. Herein, a single channel is composed of 5617 sub-carriers and uses IFFT with 8192 points. In addition, it is assumed that 8-channels are frequency multiplexed in the OFDM signal. Due to this, the OFDM signals received by the receiving antenna 10 are composed of 65536 sub-carriers. The receiving antenna 10 outputs the received OFDM signals to the receiving filter 12. The receiving filter 12 attenuates the signals out of the band covering the whole plurality of channels of the OFDM signals received by the receiving antenna 10. The receiving amplifier 14 amplifies the OFDM signals from the receiving filter 12.

The frequency converter 16 generates baseband OFDM signals by applying frequency conversion to the OFDM signals in the broadcasting frequency band outputted from the receiving amplifier 14, and then the frequency converter 16 outputs the generated OFDM signals to the A/D converter 40. The frequency converter 16 is fed with a local oscillator signal from the local oscillator 46 as well as the OFDM signals in the broadcasting frequency band from the receiving amplifier 14. The frequency converter 16 performs quadrature detection processing on the OFDM signals in the broadcasting frequency band, based on the local oscillator signal. Herein, the frequency converter 16, when generating the baseband OFDM signals, may also perform the carrier synchronization processing, sample clock synchronization processing, and symbol clock synchronization processing on the received OFDM signals. At the time, a clock is extracted from the OFDM signals, which may be used when transmitting the OFDM signals.

The frequency converter 16 may also generate the baseband OFDM signals after converting the OFDM signals in the broadcasting frequency band to those in the intermediate frequency band. Herein, on the premise that the local oscillator signal from the local oscillator 46 is L₁, the frequency converter 16 converts the OFDM signals in the broadcasting frequency band to those in the intermediate frequency band by multiplying the OFDM signals in the broadcasting frequency band by the local oscillator signal L1. Specifically, on the premise that the frequency of the local oscillator signal L₁ is f_{osc1} and that the broadcasting frequency band is a frequency band between frequency f₁ and frequency f₂, the intermediate frequency band is a frequency band between frequency f₁-f_{osc1} and frequency f₂-f_{osc1}. Herein, however, a relation of f_{osc1} < f₁ < f₂ is still held. In addition, unnecessary image signals occur in a frequency band between frequency f₁+f_{osc1} and frequency f₂+fosc1 due to the processing by the frequency converter 16; however, the image signals are attenuated by a filter (not illustrated). The upper local is processed in the same way, the description of which will be omitted.

The A/D converter 40 converts the baseband OFDM signals to digital signals and then outputs the signals to the FFT processor 70. The FFT processor 70 generates a plurality of sub-carrier signals by applying the FFT collectively to the OFDM signals from the A/D converter 40. As stated above, the OFDM signals are formed by 65536 sub-carriers; hence, the FFT processor 70 performs 65536 or more points of FFT processing with respect to a single OFDM symbol. As a result, a plurality of sub-carrier signals are outputted so as to include a plurality of channels.

The IFFT sample frequency is represented as follows: 521 (MHz)/63=8.126984 (MHz). Further, the spacing of the sub-carrier is represented as follows: 8126.984 (kMz)/8192=0.992063 (kHz). Therefore, the number of sub-carriers included in 6 MHz band is represented as follows: 6000 (kHz)/0.992063 (kHz)=6048. As a result, the number of sub-carriers included in 6 MHz band is represented by an integer, and hence the FFT processor 70 can apply FFT processing collectively to the OFDM signals in which a plurality of channels are frequency multiplexed.

The setting unit 38 stores in advance the relationship between the channel arrangement in the OFDM signals received by the relay apparatus 100 (hereinafter, referred to as an "arrangement prior to modification") and the channel arrangement in the OFDM signals to be transmitted from the relay apparatus 100 (hereinafter, referred to as a "postmodification arrangement") and directs the relationship to the modification unit 72. At the time, the setting unit 38 stores the relationship in a table form. The table stores the relationship between the arrangement prior to modification and the postmodification arrangement while sub-carrier signals included in a channel are grouped into one unit.

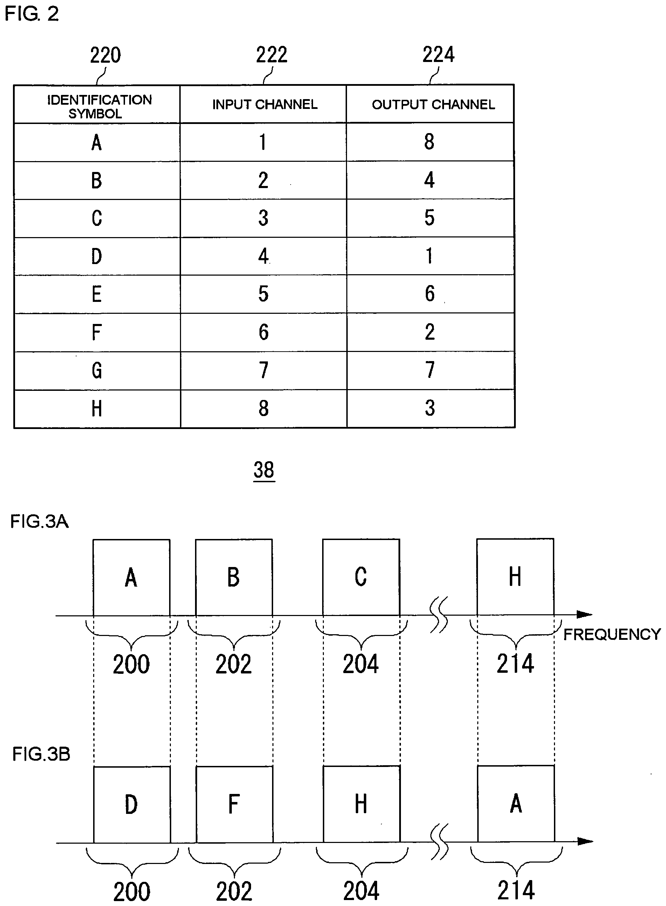

Fig. 2 illustrates a data structure of the table stored by the setting unit 38. As illustrated in the drawing, an identification symbol column 220, an input channel column 222 and an output channel column 224 are included in the table. In the identification symbol column 220, a broadcasting station to be associated with each channel is indicated. This corresponds to a broadcasting station, a program of which is delivered by OFDM signals. Herein, broadcasting stations are denoted by the identification symbols "A" to "H". The input channel column 222 indicates a channel in which a broadcasting station, which is denoted by the identification symbol in the OFDM signals received by the relay apparatus 100, is arranged. The input channel column 222 corresponds to the aforementioned arrangement prior to modification. Herein, channels "1" to "8" are stipulated; the channel "1" corresponds to the channel with the lowest frequency, and alternatively, the channel "8" corresponds to the channel with the highest frequency. As illustrated in the drawing, a program delivered by the broadcasting station denoted by the identification symbol "A" is arranged in channel "1" in the OFDM signals received by the relay apparatus 100.

The output channel column 224 indicates a channel in which a broadcasting station, denoted by an identification symbol, is arranged in the OFDM signals to be transmitted from the relay apparatus 100. The output channel column 224 corresponds to the aforementioned postmodification arrangement. As illustrated in the drawing, a program delivered by the broadcasting station, denoted by the identification symbol "A", is arranged in channel "8" in the OFDM signals to be transmitted from the relay apparatus 100. As a result, a program delivered from the broadcasting station denoted by the identification symbol "A" is changed from channel "1" to channel "8" by the relay apparatus 100. As stated above, the exemplary embodiment of the present invention deals with the SFN, and hence channel "1" in the input channel column 222 and channel "1" in the output channel column 224 are both included in the same frequency band. The setting unit 38 includes an interface (not illustrated) and receives changes in the relationship from a user via the interface. Thereby, the relationship can be flexibly changed. Now, the description will be made referring back to Fig. 1.

In accordance with the instruction given by the setting unit 38, the modification unit 72 modifies an arrangement of a plurality of sub-carrier signals from the FFT processor 70 while sub-carrier signals included in a channel are grouped into one unit. In other words, the modification unit 72 performs modification from the arrangement prior to modification to the postmodification arrangement. Such modification can be realized by interchanging the order of the sub-carrier signals. Figs. 3 (a) and 3 (b) illustrate an outline of the modification operation in the modification unit 72. Fig. 3 (a) illustrates the OFDM signals in which the arrangement prior to modification is performed. The horizontal axis represents frequency, and the first channel 200, the second channel 202, the third channel 204, and the eighth channel 214 are arranged in this order from the lowest to the highest frequency.

Herein, the first channel 200 through the eighth channel 214 correspond to the above channels "1" through "8", respectively. In the same way as Fig. 2, the broadcasting station with the identification symbol "A" is arranged in the first channel 200, and other broadcasting stations are also arranged in the same way. Fig. 3(b) illustrates the OFDM signals in which the postmodification arrangement has been performed. The arrangement of the channels themselves illustrated in Fig. 3(b) is the same as Fig. 3 (a). It is noted that the postmodification arrangement is performed in accordance with the table illustrated in Fig. 2. Therefore, the channel with the identification symbol "D" is arranged in the first channel 200. The description will be made referring back to Fig. 1.

The IFFT processor 74 generates new OFDM signals by applying IFFT processing to a plurality of sub-carrier signals in which the postmodification arrangement has been performed by the modification unit 72. The number of points of the IFFT processing is the same as that of the FFT processing in the FFT processor 70. The aforementioned FFT processor 70 and the IFFT processor 74 perform the elimination and the addition of a guard interval, respectively.

The D/A converter 44 converts the new OFDM signals from the IFFT processor 74 to analogue signals and inputs the signals to the frequency converter 22. The frequency converter 22 converts the baseband OFDM signals to those in the broadcasting frequency band by performing reverse processing to that performed by the frequency converter 16 and then inputs the signals to the transmitting amplifier 24. The OFDM signals in the broadcasting frequency band converted by the frequency converter 22 interfere with the OFDM signals inputted to the receiving antenna 10. Therefore, the relay apparatus 100 may also be provided with a coupling loop interference canceller (not illustrated). The coupling loop interference canceller is realized by a known technology, and hence the description thereof will be omitted.

The transmitting amplifier 24 amplifies the OFDM signals in the broadcasting frequency band and then inputs the signals to the transmitting filter 26. The transmitting filter 26 attenuates image signals included in the inputted OFDM signals out of the broadcasting frequency band, and harmonic component signals occurring due to the nonlinearity of the transmitting amplifier 24, or the like, and then inputs the OFDM signals to the transmitting antenna 28. The transmitting antenna 28 transmits the inputted OFDM signals as electromagnetic waves.

The structure is implemented in the hardware by any CPU of a computer, memory, and other LSI, and implemented in the software by a computer program or the like with a communication function that is loaded in a memory. Herein, functional blocks implemented by the cooperation of hardware and software are depicted. Therefore, it will be obvious to those skilled in the art that these functional blocks may be implemented in a variety of manners by hardware only, software only, or any combination thereof.

The performance of the relay apparatus 100 having the above structure will be described. The receiving antenna 10, the receiving filter 12, and the receiving amplifier 14 receive OFDM signals composed of a plurality of channels that are frequency multiplexed. The FFT processor 70 generates a plurality of sub-carrier signals by applying FFT processing to the received OFDM signals. The modification unit 72 modifies the arrangement prior to modification to the postmodification arrangement while a plurality of sub-carrier signals included in a channel are grouped into one unit in accordance with the table stored in the setting unit 38. The IFFT processor 74 generates new OFDM signals by applying IFFT processing to the plurality of sub-carrier signals, the arrangement of which has been modified. The transmitting amplifier 24, the transmitting filter 26, and the transmitting antenna 28 transmit the new OFDM signals.

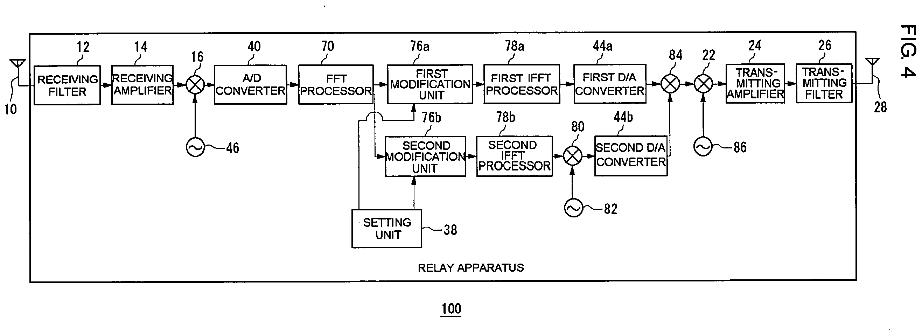

A modification example will be described below. The relay apparatus 100 according to the example deals with the SFN. Alternatively, a relay apparatus 100 according to the modification example deals with the MFN or the case where the SFN and the MFN are mixed. Fig. 4 illustrates the structure of the relay apparatus 100 according to the modification example of the present invention. The relay apparatus 100 includes, instead of the modification unit 72 and the IFFT processor 74 of the relay apparatus 100 in Fig. 1: a first modification unit 76a and a second modification unit 76b that are collectively called a modification unit 76; and a first IFFT processor 78a and a second IFFT processor 78b that are collectively called an IFFT processor 78. The relay apparatus 100 further includes: a first D/A converter 44a and a second D/A converter 44b that are collectively called a D/A converter 44; a frequency converter 80; a local oscillator 82; a synthesis unit 84; and a local oscillator 86.

The modification unit 76 modifies the arrangement prior to the modification of the plurality of sub-carrier signals from the FFT processor 70 to the postmodification arrangement thereof in the same way as the example. In particular, the arrangement prior to modification in the modification example may also be the same as that in the example. However, the post modification arrangement in the modification example is different from that in the example. Specifically, the band occupied by the post modification arrangement is different from that with 8 channels occupied by the arrangement prior to modification, and the band becomes a band with 16 channels, which is two times the band occupied by the arrangement prior to modification. It is noted that, as stated above, the number of channels included in the OFDM signals are 8 channels, and hence the channels to be used are not necessarily successive in the postmodification arrangement, that is, 8 channels are to be used among the 16 channels.

Herein, the first modification unit 76a performs modification of the 8 channels having the lowest frequencies among the 16 channels (hereinafter, referred to as a "lower frequency group") in the postmodification arrangement; alternatively, the second modification unit 76b performs modification of 8 channels having the highest frequencies among the channels (hereinafter, referred to as a "higher frequency group") in the postmodification arrangement The lower frequency group and the higher frequency group may have discrete frequency bands, not successive bands, respectively. When performing the modification of the arrangements, the modification unit 76 performs division into a plurality of groups as stated above. The number of the groups is not limited to two but may also be three or more. At the time, a plurality of modification units 76 are provided in accordance with the number of groups.

The setting unit 38 stores the relationship between the arrangement prior to modification and the postmodification arrangement for each group, in response to the modification by the modification unit 76. The IFFT processor 78 applies IFFT processing to a group unit. The frequency converter 80 performs frequency conversion on the OFDM signals from the second IFFT processor 78b by a local oscillator signal from the local oscillator 82. Herein, the frequency conversion is performed so as to generate a frequency difference between the lower frequency group and the higher frequency group. The D/A converter 44 converts digital signals to analog signals in the same way as the example, and the synthesis unit 84 synthesizes two analog signals. That is, segment from the frequency converter 80 to the synthesis unit 84 generates new OFDM signals by performing frequency conversion on a group unit. The frequency converter 22 performs frequency conversion in the same way as the example; however, the frequency of the local oscillator signal given by the local oscillator 46 is different from that given by the local oscillator 86 in order to deal with the MFN.

Another modification example will be described below. Until now, the FFT processor 70 applies FFT processing to the OFDM signals collectively. In addition, in a transmission apparatus (not illustrated), OFDM signals are typically generated by the results of IFFT processing being frequency multiplexed after applying the IFFT processing to a channel unit. In this case, window timing is sometimes different in the IFFT processing applied to a channel unit. When the relay apparatus 100 applies FFT processing to the OFDM signals generated in such a case, more than one optimal window timing is sometimes present. The relay apparatus 100 according to the another modification example is structured so as to deal with this case.

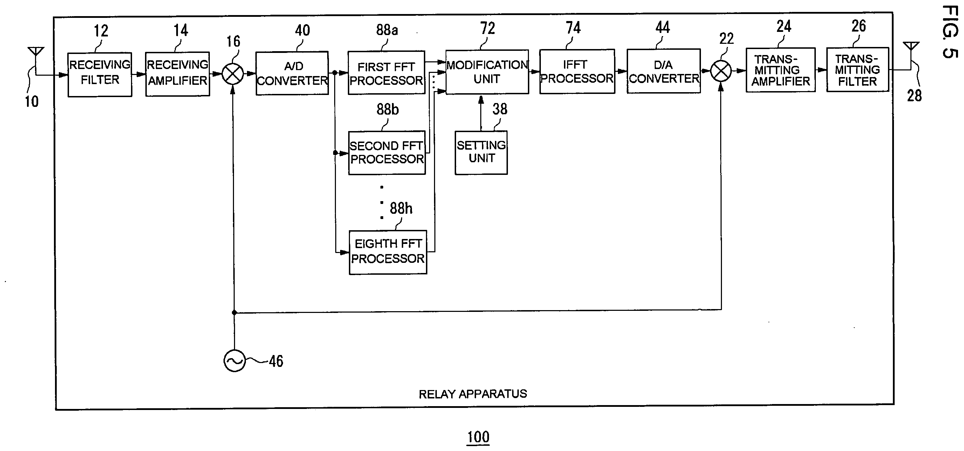

Fig. 5 illustrates the structure of a relay apparatus 100 according to another modification example of the present invention. The relay apparatus 100 includes instead of the FFT processor 70 in Fig. 1, a first FFT processor 88a, a second FFT processor 88b, and an eighth FFT processor 88h, which are collectively called an FFT processor 88. The structure, up until an A/D converter 40, operates in the same way as that in Fig. 1.

The FFT processor 88 generates a plurality of sub-carrier signals by applying FFT processing to OFDM signals in a channel unit. That is, the first FFT processor 88a applies FFT processing to the first channel 200 such that a plurality of sub-carrier signals to be included in the first channel 200 are generated. The second FFT processor 88b to the eighth FFT processor 88h perform the same process. The modification unit 72 performs modification of the arrangement prior to modification to the postmodification arrangement in a channel unit after aggregating a plurality of multi-carrier signals generated by each of the first FFT processor 88a through the eighth FFT processor 88h. The processing subsequent thereto is the same as the example, and hence the description thereof will be omitted. Alternatively, the another modification example may be combined with the aforementioned modification example.

Still another modification example will be described below. The another modification example takes into consideration where, in a transmission apparatus, the window timing of each in the IFFT processing applied to a channel unit is different from one another in the same way as the previous modification example. However, the current modification example relates to a transmission apparatus, which is different from the previous modification example.

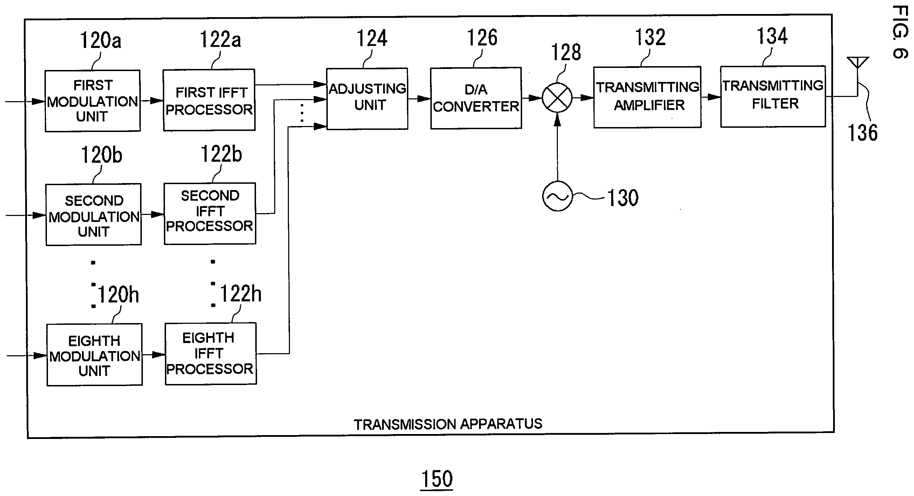

Fig. 6 illustrates the structure of a transmission apparatus 150 according to the current modification example of the present invention. The transmission apparatus 150 includes: a first modulation unit 120a, a second modulation unit 120b, and an eighth modulation unit 120h, which are all collectively called a modulation unit 120; a first IFFT processor 122a, a second IFFT processor 122b, and an eighth IFFT processor 122h, which are all collectively called an IFFT processor 122; an adjusting unit 124; a D/A converter 126; a frequency converter 128; a local oscillator 130; a transmitting amplifier 132; a transmitting filter 134; and a transmitting antenna 136.

The modulation unit 120 performs modulation on the data to be transmitted, that is, the program. The modulation can be performed by a known technology, and hence the description thereof will be omitted. The first modulation unit 120a through the eighth modulation unit 120h are associated with each of the first channel 200 through the eighth channel 214, respectively. The IFFT processor 122 applies IFFT processing to the signals from the modulation unit 120. In addition, the IFFT processor 122 communicates the head of the window timing of the IFFT processing to the adjusting unit 124 as well as the output of the results of applying the IFFT processing to the adjusting unit 124.

The adjusting unit 124 frequency multiplexes the results of the IFFT processing received from each of the first IFFT processor 122a through the eighth IFFT processor 122h. In other words, as illustrated in Fig. 3(a), the results from applying a plurality of IFFT processing are arranged on the frequency axis as seen in the first channel 200 through the eighth channel 214. Further, the adjusting unit 124 receives the head of the window timing from each of the first IFFT processor 122a through the eighth IFFT processor 122h such that each window timing is made even when frequency multiplexing is performed on the results of applying the IFFT processing.

For example, the adjusting unit 124 delays, among a plurality of window timing heads, each window timing other than the latest one, such that the window timing head are made even up to the latest one. In other words, the adjusting unit 124 makes the window timing even for IFFT processing in each of the OFDM signals of a channel unit when generating OFDM signals in which a plurality of channels are frequency multiplexed by synthesizing a channel unit of the OFDM signals.

The D/A converter 126 converts the OFDM signals from the adjusting unit 124 to analog signals, and then inputs the signals to the frequency converter 128. The frequency converter 128 converts the frequency of the OFDM signals from the D/A converter 126 to that in the broadcasting frequency band by the local oscillator signal from the local oscillator 130. The transmitting amplifier 132 amplifies the OFDM signals in the broadcasting frequency band and then inputs the signals to the transmitting filter 134. The transmitting filter 134 attenuates image signals included in the inputted OFDM signals, which are out of the broadcasting frequency band, harmonic component signals occurring due to the nonlinearity of the transmitting amplifier 132, or the like and then inputs the OFDM signals to the transmitting antenna 136. The transmitting antenna 136 transmits the inputted OFDM signals as electromagnetic waves. The relay apparatus corresponding to the transmission apparatus 150 illustrated by the above structure is illustrated as is in Figs. 1 and 4.

Still another modification example will be described below. Until now, the setting unit 38 performs modification of the arrangement prior to modification to the postmodification arrangement. This modification example has a function of attenuating a channel that is not needed to be relayed in addition to the modification process. The modification process can be performed in the same way as that described up until now. Therefore, the relay apparatus 100 according to the present modification example is the same type as those 100 in Figs. 1, 4, and 5.

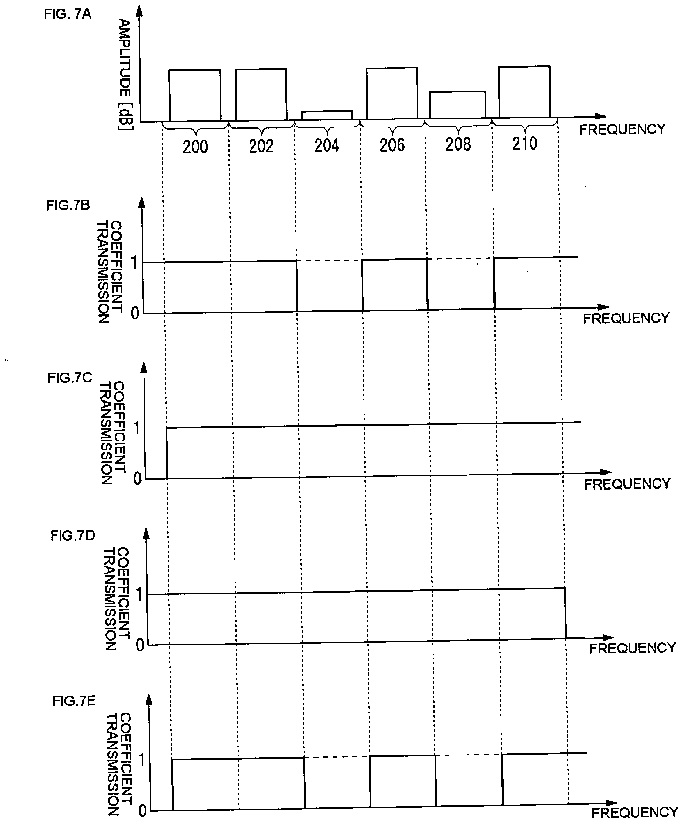

The modification units 72 or 76 includes a digital filter (not illustrated) in which a plurality of taps are connected in series. The setting unit 38 sets a tap coefficient corresponding to each of the plurality of taps. The performance of the setting unit 38 will be outlined below. The digital tap coefficient in the digital filter is stipulated in the time domain; however, the tap coefficient is described as a characteristic in the frequency domain by referring to Figs. 7 (a) through 7 (e) for ease of explanation. Figs. 7(a) through 7(e) illustrate an outline of deriving a frequency characteristic by the setting unit 38.

The setting unit 38 calculates a tap coefficient after specifying the channel number of a broadcasting station that should be relayed. Herein, it is assumed that a frequency corresponding to a channel is specified by the "channel number". For example, smaller channel numbers are assigned to the channels with lower frequencies, and large channel numbers are assigned to the channels with higher frequencies. In Fig. 7(a), the "channel numbers" are denoted by the first channel 200 through the sixth channel 210. The first channel 200 through the sixth channel 210 correspond to signals outputted from another transmission apparatus or relay apparatus. Further, it is assumed that the first channel 200, the second channel 202, the fourth channel 206, and the sixth channel 210 are specified in advance as the broadcasting station channel numbers that should be relayed. It is also assumed that the third channel 204 and the fifth channel 208, the channel numbers of the broadcasting station relayed at the time when the relay apparatus 100 was installed, have thereafter been modified to the broadcasting station channel numbers that should not be relayed for some reason.

The setting unit 38 calculates a tap coefficient in accordance with the following process (1) to (8), and then inputs the coefficient to a digital filter, which will be described later.
(1) The setting unit 38 separately specifies channel numbers of a broadcasting station that should be relayed and those of a broadcasting station that should not be relayed, respectively. As stated above, in the example in Fig. 7(a), the first channel 200 or the like is specified as the channel that should be relayed, and the third channel 204 or the like that should not be relayed.
(2) The setting unit 38 calculates a band elimination characteristic function that attenuates signals in a channel frequency band corresponding to a channel number of a broadcasting station that should not be relayed. In the case of channels structured as in Fig. 7(a), the band elimination characteristic function is shown as in Fig. 7(b).
(3) The setting unit 38 retrieves a channel number with the lowest channel frequency band among signals of channels to be extracted.
(4) The setting unit 38 calculates a function representing a high-frequency pass characteristic in which the low-frequency end of the channel frequency band corresponding to the retrieved channel number is a cut-off frequency. The function is assumed to be represented in the frequency domain and hereinafter referred to as a high-frequency pass characteristic function. In the example in Fig. 7(a), the channel with the lowest channel frequency band is the first channel 200, and the high-frequency pass characteristic function is shown as in Fig. 7(c).
(5) The setting unit 38 retrieves a channel number with the highest channel frequency band among signals of channels to be extracted.
(6) The setting unit 38 calculates a function representing a low-frequency pass characteristic in which the high-frequency end of the channel frequency band corresponding to the retrieved channel number is a cut-off frequency. The function is assumed to be represented in the frequency domain, and hereinafter referred to as a low-frequency pass characteristic function. In the example in Fig. 7(a), the channel with the highest channel frequency band in the digital terrestrial television system is the sixth channel 210, and the low-frequency pass characteristic function is shown as in Fig. 7(d).
(7) The setting unit 38 calculates a characteristic function obtained by multiplying the band elimination characteristic function by the high-frequency pass characteristic function and further by the low-frequency pass characteristic function. In the example in Fig. 7(a), the characteristic function to be calculated is shown as in Fig. 7(e).
(8) The setting unit 38 calculates a characteristic function represented in the time domain by applying IFFT processing to the above calculated characteristic function. The setting unit 38 calculates a tap coefficient by discretizing the characteristic function and then outputs it to the digital filter. The setting unit 38 may also calculate, differently from the above structure, a tap coefficient by combining bandpass filters corresponding to their respective channels.

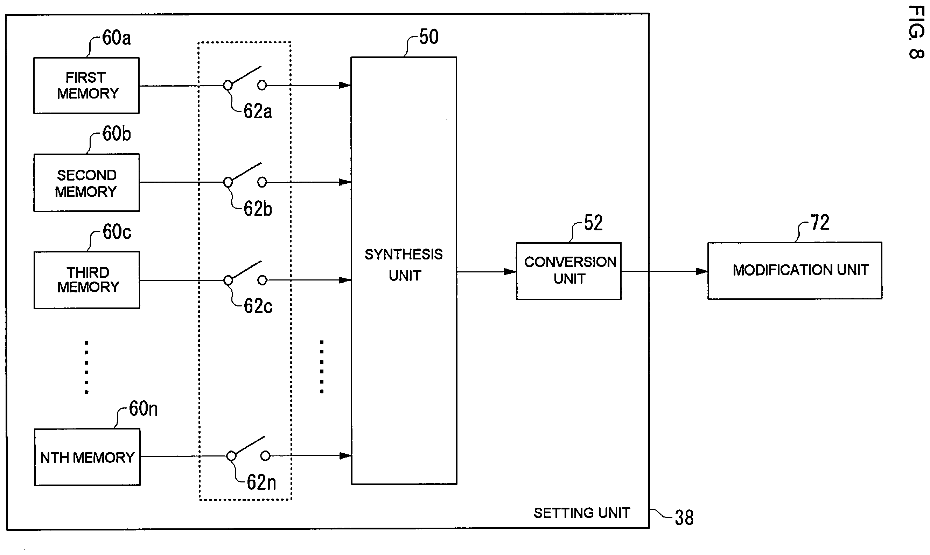

Fig. 8 illustrates the structure of the setting unit 38. The setting unit 38 includes: a first memory 60a, a second memory 60b, a third memory 60c, and an Nth memory 60n, which are collectively called a memory 60; a first switch 62a, a second switch 62b, a third switch 62c, and an Nth switch 62n, which are collectively called a switch 62; a synthesis unit 50; and a conversion unit 52.

The memory 60 stores frequency characteristics for extracting respective channels. Herein, the first memory 60a stores a frequency characteristic for extracting the first channel 200 in Fig. 7(a). The same is true for all memory 60 other than the first memory 60a, and single memory 60 stores a frequency characteristic for extracting a single channel.

When the information on the channel to be extracted, that is, the information on the channel specified by a decision unit 36, is inputted from the decision unit 36, the switch 62 turns on the corresponding channel. Due to this, the frequency characteristic for extracting the channel subsequently turned on is outputted. The synthesis unit 50 synthesizes the frequency characteristics selected by the switch 62. The conversion unit 52 performs conversion of the frequency domain to the time domain on the synthesized frequency characteristic. The conversion is carried out by using, for example, IFFT processing. With the above conversion, the conversion unit 52 generates a tap coefficient. The conversion unit 52 outputs the generated tap coefficient to the digital filter. The digital filter sets the received tap coefficient. The memory 60 stores a tap coefficient represented in the time domain corresponding to the frequency characteristic of each channel. The decision unit 36 may combine the tap coefficients corresponding to the desired channels. In the case, the conversion unit 52 is not needed. In addition, in the modification unit 72 in the last modification example, level equalization may be performed on a sub-carrier signal unit, or equalization decision processing using a pilot signal may also be performed.

According to the exemplary embodiment of the present invention, OFDM signals in which a plurality of channels are frequency multiplexed, can be modified to a plurality of sub-carrier signals by applying FFT processing collectively thereto; hence, the processing can be performed easily. Also, the arrangement of the plurality of sub-carrier signals is modified, while sub-carrier signals included in a channel are grouped into one unit; hence, a channel structure can be freely set. Also, modification of an arrangement of sub-carrier signals can be realized by interchanging the order of the sub-carrier signals; hence, the process can be easily performed. Also, the postmodification arrangement is modified by modifying contents of the table; hence, modification of the system can be dealt with flexibly. The degree of freedom in setting the channel structure can be further improved due to the application of frequency conversion of a group unit. Also, the MFN can de dealt with due to the application of frequency conversion of a group unit.

Also, OFDM signals are modified to a plurality of sub-carrier signals by applying FFT processing to a channel unit, and then an arrangement of the plurality of sub-carrier signals is modified while sub-carrier signals included in a channel are grouped into one unit; hence, the OFDM signals can be received even if window timings of IFFT processing on the transmission side are different from each other. Also, OFDM signals are modified to a plurality of sub-carrier signals by applying FFT processing to a channel unit, and then an arrangement of the plurality of sub-carrier signals is modified while sub-carrier signals included in a channel are grouped into one unit; hence, a channel structure can be freely set. Also, a channel unit of OFDM signals is frequency multiplexed by making the window timing even during IFFT processing in each of the channel units of the OFDM signals; hence, a single window timing can be provided. Also, FFT processing can be applied collectively to the receiving side.

The exemplary embodiment of the present invention has been described based on the examples. The examples have been described for exemplary purposes only, and are by no means intended to be interpreted restrictively. Rather, it can be readily conceived by those skilled in this art that various modifications may be made by making various combinations of the aforementioned components or processes, which are also encompassed in the technical scope of the present invention.

Further inventive features of the present embodiments are defined in the following paragraphs and can be claimed also: A relay apparatus (100) comprising:
a receiving unit (12, 14) that receives OFDM signals in which a plurality of channels are frequency multiplexed;
a first conversion unit (88) that generates a plurality of sub-carrier signals by applying Fourier transform processing to a channel unit of the OFDM signals received by the receiving unit (12, 14);
a modification unit (72) that modifies an arrangement of the plurality of sub-carrier signals generated by the first conversion unit (88) while sub-carrier signals included in a channel are grouped into one unit;
a second conversion unit (74) that generates new OFDM signals by applying inverse Fourier transform processing to the plurality of sub-carrier signals modified by the modification unit (72); and
a transmission unit (24, 26) that transmits the new OFDM signals generated by the second conversion unit (74).

## Claims

1. A relay apparatus (100) comprising:
- a receiving unit (12, 14) that receives OFDM signals in which a plurality of channels are frequency multiplexed;
- a FFT conversion unit (70) that generates a plurality of sub-carrier signals by applying Fourier transform processing collectively to the OFDM signals received by the receiving unit (12, 14);
- a first modification unit (76a) that modifies an arrangement of the plurality of sub-carrier signals generated by the FFT conversion unit (70) while sub-carrier signals included in a channel are grouped into one unit;
- a second modification unit (76b) that modifies an arrangement of the plurality of sub-carrier signals generated by the FFT conversion unit (70) while sub-carrier signals included in a channel are grouped into one unit,
- a first IFFT conversion unit (78a) that generates first new digital OFDM signals by applying inverse Fourier transform processing to the plurality of sub-carrier signals modified by the first modification unit (76a); and
- a second IFFT conversion unit (78b) that generates second new digital OFDM signals by applying inverse Fourier transform processing to the plurality of sub-carrier signals modified by the second modification unit (76b);
a frequency converter (80) that performs frequency conversion on the OFDM signals from the second IFFT conversion unit,
- a first D/A converter (44a) that converts the first digital signals to first analog signals,
- a second D/A converter (44b) that converts the Frequency converted second digital signals to second analog signals,
- a synthesis unit (84) that synthesizes the first and the second analog signals to new analog OFDM signals,
- a transmission unit (24, 26) that transmits the new analog OFDM signals generated by the synthesis unit (84),
- wherein the band occupied by the arrangement prior to the modifications is a band with 8 channels, whereas the band occupied by the post modification arrangements is a band with 16 channels,
- whereas 8 channels are to be used among the 16 channels, so that the number of channels included in the new analog OFDM signals is 8 channels.

## Patentansprüche

1. Relaisvorrichtung (100), umfassend:
- eine Empfangseinheit (12, 14), die OFDM-Signale empfängt, in denen mehrere Kanäle frequenzgemultiplext sind;
- eine FFT-Umwandlungseinheit (70), die mehrere Unterträgersignale erzeugt durch Anwenden einer Fouriertransformationsverarbeitung kollektiv auf die von der Empfangseinheit (12, 14) empfangenen OFDM-Signale;
- eine erste Modifizierungseinheit (76a), die eine Anordnung der mehreren Unterträgersignale, die von der FFT-Umwandlungseinheit (70) erzeugt werden, modifiziert, während Unterträgersignale, die in einem Kanal enthalten sind, in eine Einheit gruppiert werden;
- eine zweite Modifizierungseinheit (76b), die eine Anordnung der mehreren Unterträgersignale, die von der FFT-Umwandlungseinheit (70) erzeugt werden, modifiziert, während Unterträgersignale, die in einem Kanal enthalten sind, in eine Einheit gruppiert werden,
- eine erste IFFT-Umwandlungseinheit (78a), die erste neue digitale OFDM-Signale erzeugt durch Anwenden einer inversen Fouriertransformationsverarbeitung auf die mehreren Unterträgersignale, die durch die erste Modifizierungseinheit (76a) modifiziert sind; und
- eine zweite IFFT-Umwandlungseinheit (78b), die zweite neue digitale OFDM-Signale erzeugt durch Anwenden einer inversen Fouriertransformationsverarbeitung auf die mehreren Unterträgersignale, die durch die zweite Modifizierungseinheit (76b) modifiziert sind;
- einen Frequenzumsetzer (80), der eine Frequenzumwandlung an den OFDM-Signalen von der zweiten IFFT-Umwandlungseinheit durchführt,
- einen ersten D/A-Wandler (44a), der die ersten digitalen Signale in erste analoge Signale umwandelt,
- einen zweiten D/A-Wandler (44b), der die frequenzumgewandelten zweiten digitalen Signale in zweite analoge Signale umwandelt,
- eine Syntheseeinheit (84), die das erste und das zweite analoge Signal zu neuen analogen OFDM-Signalen synthetisiert,
- eine Übertragungseinheit (24, 26), die die von der Syntheseeinheit (84) erzeugten neuen analogen OFDM-Signale überträgt,
- wobei das Band, das durch die Anordnung vor den Modifizierungen belegt wird, ein Band mit 8 Kanälen ist, während das Band, das von den Anordnungen nach Modifizierung belegt wird, ein Band mit 16 Kanälen ist,
- wobei 8 Kanäle unter den 16 Kanälen zu verwenden sind, so dass die Anzahl der Kanäle, die in den neuen analogen OFDM-Signalen enthalten sind, 8 Kanäle beträgt.

## Revendications

1. Appareil de relais (100) comprenant:
- une unité de réception (12, 14) qui reçoit des signaux OFDM dans lesquels une pluralité de canaux sont multiplexés en fréquence;
- une unité de conversion FFT (70) qui génère une pluralité de signaux de sous-porteuse en appliquant un traitement de transformée de Fourier collectivement aux signaux OFDM reçus par l'unité de réception (12, 14);
- une première unité de modification (76a) qui modifie un agencement de la pluralité de signaux de sous-porteuse générés par l'unité de conversion de FFT (70) lorsque des signaux de sous-porteuse inclus dans un canal sont regroupés dans une unité;
- une seconde unité de modification (76b) qui modifie un agencement de la pluralité de signaux de sous-porteuse générés par l'unité de conversion de FFT (70) lorsque des signaux de sous-porteuse inclus dans un canal sont regroupés dans une unité,
- une première unité de conversion IFFT (78a) qui génère de premiers nouveaux signaux OFDM numériques en appliquant un traitement de transformée de Fourier inverse à la pluralité de signaux de sous-porteuse modifiés par la première unité de modification (76a); et
- une seconde unité de conversion IFFT (78b) qui génère de seconds nouveaux signaux OFDM numériques en appliquant un traitement de transformée de Fourier inverse à la pluralité de signaux de sous-porteuse modifiés par la seconde unité de modification (76b);
- un convertisseur de fréquence (80) qui effectue une conversion de fréquence sur les signaux OFDM provenant de la seconde unité de conversion IFFT,
- un premier convertisseur N/A (44a) qui convertit les premiers signaux numériques en de premiers signaux analogiques,
- un second convertisseur N/A (44b) qui convertit les seconds signaux numériques convertis en fréquence en de seconds signaux analogiques,
- une unité de synthèse (84) qui synthétise les premiers et seconds signaux analogiques en de nouveaux signaux OFDM analogiques,
- une unité de transmission (24, 26) qui transmet les nouveaux signaux OFDM analogiques générés par l'unité de synthèse (84),
- dans lequel la bande occupée par l'agencement avant les modifications est une bande à 8 canaux, tandis que la bande occupée par les agencements de post-modification est une bande à 16 canaux,
- tandis que 8 canaux doivent être utilisés parmi les 16 canaux, de sorte que le nombre de canaux inclus dans les nouveaux signaux OFDM analogiques est de 8 canaux.
